Europäisches Patentamt

European Patent Office

Office européen des brevets

(11) Veröffentlichungsnummer: **0 337 497**

**A2**

(12) # EUROPÄISCHE PATENTANMELDUNG

(21) Anmeldenummer: 89106870.2

(22) Anmeldetag: 17.04.89

(51) Int. Cl.4: **A23L 1/314** , **A23C 19/032** , **A21D 8/04**

(30) Priorität: 15.04.88 DE 3812502

(43) Veröffentlichungstag der Anmeldung:
18.10.89 Patentblatt 89/42

(84) Benannte Vertragsstaaten:
**BE CH FR GB LI NL SE**

(71) Anmelder: **Gesellschaft für Biotechnologische Forschung mbH (GBF)**
**Mascheroder Weg 1**
**D-3300 Braunschweig-Stöckheim(DE)**

(72) Erfinder: **Lösche, Klaus H.G., Prof. Dr.**
**Johannisburger Strasse 20**
**D-2850 Bremerhaven(DE)**
Erfinder: **Kroner, Karl Heinz, Dipl.-Ing.**
**Schneekoppeweg 30**
**D-3340 Wolfenbüttel(DE)**
Erfinder: **Hustedt, Helmut, Dr.**
**Schleusenstrasse 24**
**D-3303 Vechelde(DE)**

(74) Vertreter: **Hoormann, Walter, Dr.-Ing. et al**
**FORRESTER & BOEHMERT**
**Widenmayerstrasse 4/I**
**D-8000 München 22(DE)**

(54) **Verfahren zum Aufbereiten von lebensmittelmassen durch Reifung.**

(57) Verfahren zum Aufbereiten von Lebensmittelmassen wie insbesondere Milch- und Fleischprodukten, Sauerteig u.dgl. durch Reifung, wobei Rein- oder Mischkulturen von eine Reifung der betreffenden Lebensmittelmasse bewirkenden gebräuchlichen Mikroorganismen in an sich bekannter Weise in einem geeigneten Nährsubstrat gezüchtet werden, die gezüchteten Mikroorganismen einem gezielten, schonenden Zellaufschluß unterworfen werden, und das nach dem Zellaufschluß erhaltene Produkt mit den aktivierten Enzymkomplexen der aufzubereitenden Lebensmittelmasse direkt zugeführt wird.

EP 0 337 497 A2

## Verfahren zum Aufbereiten von Lebensmittelmassen durch Reifung

Die Erfindung betrifft ein Verfahren zum Aufbereiten von Lebensmittelmassen wie insbesondere Milch- und Fleischprodukten, Sauerteig u.dgl. durch Reifung.

Schon seit eh und je spielen Mikroorganismen - zunächst unbewußt und später dann empirisch erkannt - bei der Her stellung von Lebensmitteln und Getränken eine wichtige Rolle. Zunächst entstanden derartige gereifte Produkte rein zufällig, wenn nämlich die Ausgangsprodukte eine Zeit lang unter Bedingungen gehalten wurden, welche eine Entwicklung einer natürlichen Mikroorganismenflora begünstigten. Nachdem man die entsprechenden Auswirkungen als solche erkannt hatte, beimpfte man dann häufig bestimmte Lebensmittel-Rohmaterialien mit einem Rest einer älteren Charge und schuf damit eine Technik, die grundsätzlich auch heute bei bestimmten Produkten bekanntlich noch durchaus üblich ist.

Erst die Entdeckung der für derartige Reifeprozesse von Lebensmittelmassen verantwortlichen Mikroorganismen und ihrer Enzyme sowie die daraufhin erfolgte Entwicklung neuer Züchtungs- und Isolierungstechniken führten dann später zu gezielten, speziellen Verfahrensweisen und damit zu völlig neuen Perspektiven der Lebensmitteltechnologie.

So erhalten zahlreiche traditionelle Lebensmittel und Getränke u.a. ihr Aroma und damit ihren Geschmack im wesentlichen durch die Tätigkeit von Mikroorganismen, die Bakterien, Hefen und höhere Pilze (Schimmelpilze) einschließen, wobei es sich bei dem jeweiligen Prozeß um eine Fermentation, Gärung, anaerobes Wachstum und Metabolismus ebenso handeln kann wie die Produktion mikrobieller extra- und/oder intrazellulärer Enzyme.

Einen erheblichen Teil unserer Kenntnisse über die mikrobielle Physiologie und deren Metabolismus verdanken wir dem eingehenden Studium von in Lebensmitteln bzw. Getränken inkorporierten Mikroorganismen. So zeigte bspw. bereits Pasteur, daß die Hefegärung auf zuckerhaltigem Substrat ursächlich am Weinaroma beteiligt ist. Aspergillus oryzae ist z.B. der dominante Prozeßkeim und Flavor-produzierende Organismus für Sojasoße, Miso und andere asiatische Lebensmittelprodukte. Penicellium roqueforti ist der typische Aroma- und Geschmacksbildner der Blau-Käsesorten. Weiterhin ist es zwischenzeitlich hinlänglich bekannt, daß es sich bei dem Mechanismus der Diacetyl-Produktion, also dem typischen Butteraroma, um Streptococcus diacetylactis handelt, und man kann heutzutage bspw. Corynebacterium glutamicum so manipulieren, daß von diesem Organismus große Mengen Mono-Natrium-Glutamat produziert werden, bei dem es sich bekanntlich um einen umfänglich eingesetzten Geschmacksverstärker handelt.

Nachdem man zu den vorstehend beispielhaft erwähnten und weiteren Erkenntnissen dieser Art gekommen war, wurde es evident, daß Mirkoorganismen mit ihrem arttypischen Enzymsystem eine vorzügliche potentielle Quelle für eine industrielle Produktion von Aroma- und Geschmacksstoffen sind und auch darüber hinaus Möglichkeiten beinhalten, eine Reifung von Lebensmittelmassen bzgl. weiterer Eigenschaften bspw. bzgl. Farbgebung, Schnittfestigkeit von Wurstwaren u.dgl. gleichsam gesteuert durchzuführen.

Bei der Entwicklung entsprechender Aufbereitungsverfahren für Lebensmittelmassen spielte bereits alsbald der Gesichtspunkt eine wichtige Rolle, Reifungsprozesse von Lebensmittelmassen, wie sie aufgrund von Mikroorganismen ohne gezielte Beeinflussung von außen bspw. bei der Käseherstellung bei relativ langer Lagerzeit gleichsam von selbst entstehen, entscheidend zu verkürzen, ohne dabei erhebliche Qualitätseinbußen des Endproduktes in Kauf nehmen zu müssen. Dabei kam man jedoch zu der Erkenntnis, daß eine relativ schnelle Reifung, wie sie bspw. durch Zusatz größerer Mengen an Kultursubstraten zu erzielen ist, zu einer deutlich niedrigeren Haltbarkeit der Endprodukte führt.

Zur Erzielung einer kürzeren Reifungszeit ist mit der DE-OS 26 52 558 bspw. ein Verfahren zum Herstellen von aromatischer, gesäuerter Butter bekanntgeworden, bei dem durch Verbuttern eines ungesäuerten Rahms Butterkorn erzeugt wird, in welches wenigstens ein aromatischer Starter (entstanden aus einer Einwirkung entsprechender Mikroorganismen auf ein fettarmes Milchprodukt) und ein durch mikrobielle Umwandlung eines fettarmen Milchproduktes erhaltenes, nicht aromatisches Säurekonzentrat eingearbeitet werden. Dieses bekannte Verfahren hat sich als relativ zeit- und investitionsaufwendig erwiesen, da (neben dem eigentlich Butterungsvorgang) zwei unabhängig voneinander verlaufende mikrobielle Umsetzungen zur Erzeugung von Aromastoffen einerseits sowie des nicht aromatischen Säurekonzentrats andererseits durchgeführt werden müssen.

Bei einem anderen bekannten Verfahren zur Herstellung von Geschmacks- und Aromazusätzen für Milchprodukte (US-PS 3 048 490) wird eine sterile zitratangereicherte Käsemolke bei einem pH-Wert von 5 bis 7 mit einem zitratfermentierenden Mikrobenstamm inokuliert und anschließend gereift. Das erhaltene Produkt wird sodann in relativ kleiner Menge wie üblich hergestelltem Cottage Cheese zugesetzt und erzeugt in diesem bei einer normalen etwa dreitägen Lagerung bis zum Verkauf ein intensives Geschmacks- und Geruchsaroma.

Mit diesem Verfahren wird indes keine beachtliche Verkürzung der Reifungszeit erzielt, sondern im wesentlichen lediglich bei einer speziellen Käseherstellung eine Intensivierung der Aroma- und Geruchsbildung erreicht, wie dieses bspw. auch beim Gegenstand der DE-PS 19 13 853 der Fall ist.

Aus der EU-PS 0 058 856 ist ein Verfahren zur Herstellung von aromahaltigen Lebensmittelprodukten bekannt, mit dem die Reifungszeit bei voller Aromaentwicklung im Lebensmittelprodukt erheblich verkürzt werden soll, ohne dabei die Haltbarkeit entscheidend herabzusetzen. Bei diesem bekannten Verfahren werden zunächst Rein- oder Mischkulturen von Mikroorganismen in einem Nährmedium gezüchtet, das mindestens teilweise aus der aufzubereitenden Lebensmittelmasse besteht, wobei die endogen und/oder exogen gebildeten Enzymkomplexe sodann isoliert werden und die isolierten Enzymkomplexe anschließend einer wässrigen Lösung oder Suspension der Lebensmittelgrundmasse zugesetzt werden. Die mit den isolierten Enzymkomplexen versetzte wässrige Lösung bzw. Suspension wird sodann im Rahmen einer zweiten Fermentation einer biochemischen Schnellreifung unterworfen, welche nach Erreichen einer gewünschten Konzentration an Geruchs- und Geschmacksstoffen durch Inaktivierung der Enzymkomplexe (bspw. durch Ultrahocherhitzung) beendet wird. Schließlich wird die so erhaltene Fermentatlösung bzw. -suspension in einer für die gewünschte Aromatisierung ausreichenden Menge der zu aromatisierenden Lebensmittelgrundmasse zugesetzt, wobei ggf. eine weitere Reifung angeschlossen werden kann. Mit diesem im wesentlichen auf eine Aromatisierung von Lebensmittelprodukten beschränkten Verfahren ist der Reifungsprozeß bei diversen Lebensmittelmassen ebenfalls noch nicht in Relation zu einer üblichen Langzeitreifung in einem Ausmaße abzukürzen, wie dieses aus naheliegendem an sich wünschenswert ist, wobei im übrigen der eigentliche Reifungsprozeß gleichsam neben der aufzubereitenden Lebensmittelmasse stattfindet und das dabei erhaltene Produkt erst dann der aufzubereitenden Lebensmittelmasse gleichsam als Aromakonzentrat beigemengt wird.

Der vorliegenden Erfindung liegt die Aufgabe zugrunde, ein Verfahren der eingangs beschriebenen Gattung zu schaffen, mit dem eine keineswegs lediglich auf eine Aromatisierung beschränkte Reifung von Lebensmittelmassen gegenüber einer Langzeitreifung ohne beachtliche nachteilige Wirkungen bzgl. Haltbarkeit etc. ganz beachtlich abzukürzen ist, wobei der Reifungsprozeß im Gegensatz zum nächstkommenden Stand der Technik unmittelbar in der aufzubereitenden Lebensmittelmasse stattfinden soll.

Die Lösung dieser Aufgabe besteht erfindungsgemäß darin, daß bei einem gattungsgemäßen Verfahren Rein- oder Misch-kulturen von eine Reifung der betreffenden Lebensmittelmasse bewirkenden gebräuchlichen Mikroorganismen in an sich bekannter Weise in einem geeigneten Nährsubstrat gezüchtet werden, daß die gezüchteten Mirkoorganismen sodann einem gezielten schonenden Zellaufschluß unterworfen werden, und daß das nach dem Zellaufschluß erhaltene Produkt mit den aktivierten Enzymkomplexen der aufzubereitenden Lebensmittelmasse direkt zugeführt wird (also nicht etwa als Aromakonzentrat beigemengt wird).

Es hat sich gezeigt, daß als Nährsubstrat zum Züchten der Mikroorganismen ein der aufzubereitenden Lebensmittelmasse analoges Medium mit gut assimilierbaren C- und N-Quellen sowie ggf. Vitaminen besonders zweckmäßig ist, wobei die in dem Nährsubstrat gewachsenen Mikroorganismen in vorteilhafter Weise durch Zentrifugieren von dem Nährsubstrat getrennt werden können, und wobei das nach dem Separieren der Mikroorganismen verbleibende, durchfermentierte Nährsubstrat in einer bevorzugten Ausgestaltung der erfindungsgemäßen Verfahrens der aufzubereitenden Lebensmittelmasse noch zugesetzt werden kann.

Bei einer Vielzahl möglicher Anwendungen hat sich eine Konzentration der nicht von dem Nährsubstrat getrennten Mikroorganismen durch ein Membranverfahren wie eine Mikrofiltration, Ultrafiltration oder Umkehrosmose als besonders zweckmäßig herausgestellt.

Der erfindungsgemäß vorgesehene gezielte Zellaufschluß, unter dem im Rahmen der vorliegenden Erfindung ein gleichsam "dosierter" Zellaufschluß zu verstehen ist, erfolgt bevorzugt mechanisch, und zwar höchst bevorzugt durch Naßvermahlung in einer Rührwerkskugelmühle od.dgl. Er kann jedoch bei verschiedenen Anwendungsfällen auch in sehr zweckmäßiger Weise durch Hochdruckhomogenisation erfolgen.

Wenngleich bei Durchführung des erfindungsgemäßen verfahrens bei verschiedenen Anwendungsfällen ein weitgehend vollständiger Zellaufschluß zweckmäßig sein kann, ist dieses keineswegs in jedem Falle als optimal anzusehen. Vielmehr wurde erfindungsgemäß gefunden, daß der gezielte Zellaufschluß - je nach Art und Ausbildung der Mikroorganismen - auch bspw. und insbesondere so durchgeführt werden kann, daß er im wesentlichen nur im periplasmatischen Bereich erfolgt, wobei mithin im wesentlichen dann lediglich die äußeren Zellwände aufgeschlossen werden, während die innere Zellwand jeweils erhalten bleibt, um dabei insgesamt Enzyme im periplasmatischen Raum (zwischen äußerer und innerer Zellwand) zu aktivieren.

Bzgl. des bevorzugt mechanisch vorgesehenen gezielten Zellaufschlusses der Mikroorganismen sei noch nachgetragen, daß sich die bevorzugt vorgesehene Naßvermahlung oder Hochdruckhomogenisation deshalb als besonders zweckmäßig erwiesen haben, weil hierbei eine sehr feinfühlige Differenzierung möglich ist was bspw. bei einer Ultraschallbehandlung nicht möglich ist, bei welcher auch cytoplasmatische Räume aufgebrochen werden.

Für eine nach dem Zellaufschluß ggf. vorgesehene Trocknung des erhaltenen Produktes hat sich eine Gefriertrocknung als besonders zweckmäßig herausgestellt.

Bei einem für die industrielle Anwendung besonders wichtigen Einsatzfall, nämlich der Aufbereitung von Wurstmasse zu Rohwurst, können bevorzugt im wesentlichen zellfreie Enzymkomplexe aus Lactobazillus plantarum verwendet werden, wobei in Ausgestaltung der vorliegenden Erfindung zusätzlich noch (im wesentlichen zellfreie) Enzymkomplexe aus Staphylococcus carnosus oder einer ähnlichen Spezie verwendet werden können.

Für eine nach dem erfindungsgemäßen Verfahren erfolgende Aufbereitung von Sauerteig haben sich im wesentlichen zellfreie Enzymkomplexe aus Milchsäurebakterien oder/und Hefen wie Candida boidini, Candida krusei o.ä. als besonders zweckmäßig erwiesen.

Die Erfindung wird nachstehend an Ausführungsbeispielen weiter erläutert, ist jedoch - wie für den zuständigen Fachmann ohne weiteres erkennbar ist - hierauf selbstverständlich in keiner Weise beschränkt.

Beispiel 1: Rohwurst-Herstellung (hier: Salami)

Material für 100 kg

30 kg R 2 Rindfleisch entsehnt, mit max. 5 % sichtbarem Fett, roh
10 kg S 2 Schweinefleisch ohne Sehnen, mit max. 5 % sichtbarem Fett, roh
30 kg S 2 Schweinefleisch ohne Sehnen, mit max. 5 % sichtbarem Fett, roh
30 kg S 8 Rückenspeck ohne Schwarte, roh

Gewürze und Zutaten:

3 kg Nitritpökelsalz
0,1 kg Farbfestiger
0,02 kg lyophisierter Enzymkomplex aus L. plantarum ("aktivierte Milchsäurebakterien"),
0,5 - 1,0 kg Zucker (z.B. Maltodextrin)

Parameter

Reifen der Wurstmasse bei 24/25°C, 95 % relative Feuchte am 1. Tag.

Die Temperatur ca. 2°C pro Tag senken bis auf eine Endtemperatur von 18°C. Die relative Luftfeuchte auf 80 bis 75 % absenken.

Ergebnis:

Die Gelierung der Wurstmasse tritt nach 4, spätestens nach 5 Tagen ein. Die Geschmacksprägung der Rohwurst (volles Aroma) ist nach 5, spätestens nach 7 Tagen abgeschlossen.

Es resultiert eine farbkräftige, aromatische Rohwurst mit außergewöhnlicher Wasserbindung (Ausbeuterhöhung) und normaler Haltbarkeit.

Beispiel 2: Sauerteig-Herstellung

a) Direkte Versäuerung eines Roggenmehles Mit getrocknetem Material aus L. plantarum-Aufschluß:

Anwendung: 0,5 % - max. 5 % bezogen auf Mehl.

Bei einer Teigausbeute von ca. TA 200 und Anwendung von 2,5 % Zellaufschluß, 0,2 % Saccharose und einer Reifetemperatur von 35 - 40°C werden in 1,5 h 8 Säuregrade, in 4 h etwa 14 Säuregrade, in 7 h ca. 20 Säuregrade erzielt.

Ein so versäuertes Mehl zeichnet sich durch hohe Lagerfähigkeit und -stabilität bei Raumtemperatur aus: Nach 3 Tagen tritt noch keine Veränderung der Säuregrade auf, so daß ein problemloses Verpacken in dieser Zeit möglich ist. Die resultierenden Brote zeichnen sich durch hohe Brotausbeuten, herzhaft aromatischen Geschmack und verlängerte Frischhaltung aus.

b) Zellaufschluß zur Optimierung einer Sauerteigführung

Der Einsatz von 0,2 - max. 2 % Zellaufschluß aus z.B. L. plantarum bez. auf Mehl in einem herkömmlich herangeführten Grundsauer verkürzt die Reifezeiten von ca. 8 h auf 3 - 5 h.

Der zusätzliche Einsatz von 0,1 - max. 1 % Zellaufschluß aus z.B. Candida krusei bez. auf Mehl in einem Grundsauer erlaubt eine zielgerichtete und vollkommene Geschmacksausprägung in einer verkürzten Reifezeit und minimiert negative fermentative Aromaausprägungen durch Fremdhefen. Ein so hergestellter Grundsauer ist ferner durch seine hohe Lagerstabilität (mehrere Tage) gekennzeichnet, und ermöglicht damit das Erbakken einer gleichbleibenden und hochwertigen Brotqualität über einen längeren Zeitraum.

Die resultierenden Brote sind besonders aromareich und weisen überraschenderweise eine deutlich verlängerte Frischhaltung auf im Vergleich zu herkömmlich hergestellten Broten.

Wie aus den vorstehenden Ausführungen deutlich geworden ist, ist die vorliegende Erfindung auf die vorstehenden Ausführungsbeispiele in keiner Weise beschränkt, sondern läßt selbstverständlich nicht nur andere Rezepturen und Verfahrensabläufe zu, sondern auch eine Vielzahl weiterer Anwendungsfälle, unter denen bspw. Milchprodukte besonders hervorzuheben sind.

Insgesamt wurde mit dem erfindungsgemäßen Verfahren eine Möglichkeit geschaffen, die Aufbereitung von Lebensmittelmassen durch Reifung gegenüber üblicher Langzeitreifung ganz erheblich zu beschleunigen, ohne daß es dabei etwa zu beachtlichen Qualitätseinbußen oder sonstigen negativen Nebeneffekten (bspw. einer beachtlichen Herabsetzung der Haltbarkeit) kommt, wobei über eine Aromatisierung bzw. Geschmacksbildung hinaus im Rahmen der Reifung auch weitere Eigenschaften der Lebensmittelmassen bzw. der herzustellenden Endprodukte wie die Farbgebung, Schnittfestigkeit u.dgl. bei Anwendung der erfindungsgemäßen Verfahrens in positiver Weise beeinflußt werden.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Ansprüche**

1. Verfahren zum Aufbereiten von Lebensmittelmassen wie insbesondere Milch- und Fleischprodukten, Sauerteig u.dgl. durch Reifung, wobei Rein- oder Mischkulturen von eine Reifung der betreffenden Lebensmittelmasse bewirkenden gebräuchlichen Mikroorganismen in an sich bekannter Weise in einem geeigneten Nährsubstrat gezüchtet werden, die gezüchteten Mikroorganismen einem gezielten, schonenden Zellaufschluß unterworfen werden, und das nach dem Zellaufschluß erhaltene produkt mit den aktivierten Enzymkomplexen der aufzubereitenden Lebensmittelmasse direkt zugeführt wird.

2. Verfahren nach Anspruch 1, dadurch gekennzeichnet, daß als Nährsubstrat zum Züchten der Mikroorganismen ein der aufzubereitenden Lebensmittelmasse analoges Medium mit gut assimilierbaren C- und N-Quellen sowie ggf. Vitaminen verwendet wird.

3. Verfahren nach Anspruch 1 oder 2, dadurch gekennzeichnet, daß die in dem Nährsubstrat gewachsenen Mikroorganismen durch Zentrifugieren von dem Nährsubstrat getrennt werden.

4. Verfahren nach Anspruch 3, dadurch gekennzeichnet, daß das nach dem Separieren der Mikroorganismen verbleibende, durchfermentierte Nährsubstrat der aufzubereitenden Lebensmittelmasse zugesetzt wird.

5. Verfahren nach Anspruch 1 oder 2, gekennzeichnet durch eine Konzentration der nicht von dem Nährsubstrat getrennten Mikroorganismen durch ein Membranverfahren wie eine Mikrofiltration, Ultrafiltration oder Umkehrosmose.

6. Verfahren nach einem oder mehreren der vorhergehenden Ansprüche, dadurch gekennzeichnet, daß der gezielte Zellaufschluß der Mikroorganismen mechanisch erfolgt.

7. Verfahren nach Anspruch 6, dadurch gekennzeichnet, daß der gezielte Zellaufschluß durch Naßvermahlung in einer Rührwerksmühle od.dgl. erfolgt.

8. Verfahren nach Anspruch 6, dadurch gekennzeichnet, daß der Zellaufschluß durch Hochdruckhomogenisation erfolgt.

9. Verfahren nach einem der Ansprüche 6 bis 8, insbesondere Anspruch 7, dadurch gekennzeichnet, daß der Zellaufschluß im wesentlichen nur im periplasmatischen Bereich erfolgt.

10. Verfahren nach einem oder mehreren der vorhergehenden Ansprüche, dadurch gekennzeichnet, daß das nach dem Zellaufschluß erhaltene Produkt getrocknet wird.

11. Verfahren nach Anspruch 10, dadurch gekennzeichnet, daß das an dem Zellaufschluß erhaltene Produkt gefriergetrocknet wird.

12. Verfahren nach einem oder mehreren der vorhergehenden Ansprüche, dadurch gekennzeichnet, daß zum Aufbereiten von Wurstmasse zu Rohwurst im wesentlichen zellfreie Enzymkomplexe au Lactobazillus plantarum verwendet werden.

13. Verfahren nach Anspruch 12, dadurch gekennzeichnet, daß zum Aufbereiten von Wurstmasse zu Rohwurst zusätzlich im wesentlichen zellfreie Enzymkomplexe aus Staphylococcus carnosus oder einer ähnlichen Spezie verwendet werden.

14. Verfahren nach einem oder mehreren der Ansprüche 1 bis 11, dadurch gekennzeichnet, daß zum Aufbereiten von Sauerteig im wesentlichen zellfreie Enzymkomplexe aus Milchsäurebakterien verwendet werden.

15. Verfahren nach einem oder mehreren der Ansprüche 1 bis 11, dadurch gekennzeichnet, daß zum Aufbereiten von Sauerteig im wesentlichen zellfreie Enzymkomplexe aus Hefen wie Candida boidini, Candida krusei o.ä. verwendet werden.